# EUROPEAN PATENT APPLICATION

(11) **EP 4 664 700 A1**
(43) Date of publication of application: **17.12.2025**
(21) Application number: 25174345.6
(22) Date of filing: 06.05.2025
(51) Int. Cl.: H02G 11/00, H02G 3/32

(54) **ANGLED ANCHOR MOUNTS**

(30) Priority: 12.06.2024 US 202463659144 P; 22.04.2025 US 202519185636
(71) Applicant: HellermannTyton Corporation, Milwaukee, WI 53224 (US)
(72) Inventor: Duncan, Gabriel, Wauwatosa, Wisconsin (US); Haftarski, Eric John, Muskego, Wisconsin (US); Cottrill, Jeff, Germantown, Wisconsin (US); Fish, Ethan, Milwaukee, Wisconsin (US)
(74) Representative: Hernandez, Yorck

(57) **Abstract**

Disclosed are strain-relief clip assemblies, which include a fixing portion and/or a mount portion, for providing strain relief to bundles of elongated objects (e.g., cables). In one example, a strain-relief clip assembly includes a fixing and a mount. The fixing is configured to secure onto a bundle and the mount is configured to attach the fixing to a structure. The fixing and the secured bundle are configured to rotate independently relative to the mount to provide resistance to axial and rotational movement to the bundle, which may be, in some instances, caused by the inadvertent mishandling of the bundle (e.g., wiring harness) during an installation process. Additionally, the utilization of the disclosed strain-relief clip assemblies may decrease cable rotation and twisting that is caused by vibration, which can provide a strain relief solution for high-speed data cables for sensors, cameras, radars, and the like.

## Description

### INCORPORATION BY REFERENCE

This application claims the benefit of U.S. Provisional Application No. 63/659,144, filed June 12, 2024, the disclosure of which is incorporated herein by reference.

### BACKGROUND

Automotive vendors collect cables, hoses, wiring, harnesses, and other elongated objects together to fabricate bundles, which the automobile manufacturer utilize during the assembly of a vehicle at an automotive assembly plant. During the fabrication by the vendors, any fasteners and/or mounts needed for routing and clipping the bundles to the vehicle may be preassembled onto the bundles. As part of this process, in some cases, a bundle may be inserted into a rubber bushing, which is then fixed to the elongated bundle (e.g., bonded, over-molded).

After the preassembled bundles arrive at the automotive assembly plant, the preassembled bundles are moved, uncoiled, and reworked before and during their final installation and securement on a vehicle. Post-assembly vehicle inspections sometimes reveal that a worker inadvertently introduced a twist to the bundle during the pre-installation handling of the bundle. Twisted cables, hoses, harnesses, and the like, can experience stress and may translate stress to the termination connections, which may cause a failure of termination connections. For example, a twisted secured bundle for a wheel speed sensor cable, hydraulic brake hose, wire harness, or the like, when routed from a fixed vehicle chassis location to a suspended vehicle steering component, may introduce additional strain into the bundle while the vehicle is driving on a rough road, experiences an impact, the wheel is jostled, or the like. Such additional strain may especially be introduced when the bundle is not allowed to rotate or twist freely at the secured location. To address such an unintentional twist, the bundle may need to be reworked to remove the twist, causing delay and increased labor costs.

### SUMMARY

This document describes strain-relief clip assemblies for providing strain relief to bundles of elongated objects. The strain-relief clip assemblies are designed to decrease rework delays, decrease labor costs, and prevent termination connection failures.

In one general aspect, the techniques and apparatuses described include a clip assembly having a fixing and a mount. The fixing is configured to secure onto a bundle to resist axial and rotational movement. The mount is configured to attach the fixing to a structure. The fixing and the secured bundle are configured to rotate independently relative to the mount. In this way, the strain-relief clip assembly may provide strain relief to the elongated bundle.

In another general aspect, the techniques and apparatuses described include a fixing. The fixing includes a retainer assembly configured to retain a cable. The retainer assembly includes a first body portion, a second body portion, and a cable retainer portion. The first body portion includes a first open-ended slot with a first closed end. The second body portion includes a second open-ended slot with a second closed end. The second body portion is configured to be coupled to the first body portion. The cable retainer portion is configured to receive the cable and is defined by the first body portion closed end and the second body portion closed end.

In a further general aspect, the techniques and apparatuses described include a mount. The mount includes a connector configured to movably connect with a retainer assembly. The mount includes a base that supports the connector and the base is configured to connect to a structure.

This Summary is provided to introduce simplified concepts of strain-relief clip assemblies for providing strain relief to a bundle of elongated objects, which are further described below in the Detailed Description and are illustrated in the Drawings. This Summary is not intended to identify essential features of the claimed subject matter, nor is it intended for use in determining the scope of the claimed subject matter.

### BRIEF DESCRIPTION OF THE DRAWINGS

The details of one or more implementations of strain-relief clip assemblies for providing strain relief to bundles of elongated objects are described with reference to the following Drawings.
FIG. 1 is a schematic representation of strain-relief clip assemblies.
FIG. 2A is a rear side perspective view of a strain-relief clip assembly in an open position.
FIG. 2B is a front side perspective view of the strain-relief clip assembly of FIG. 2A in the open position.
FIG. 3 is a partial, side perspective view of the strain-relief clip assembly of FIG. 2A in the closed position, with a retained bundle.
FIG. 4 is an exploded perspective view of the strain-relief clip assembly of FIG. 2A.
FIG. 5A is a first end view of the first body portion of the strain-relief clip assembly of FIG. 2A.
FIG. 5B is a second end view of the first body portion of the strain-relief clip assembly of FIG. 2A.
FIGS. 6A-6D are a sequence of side views of the first body portion of the strain-relief clip assembly of FIG. 2A, which illustrate rotation of the first body portion.
FIG. 7A is a first end view of the second body portion of the strain-relief clip assembly of FIG. 2A.
FIG. 7B is a second end view of the second body portion of the strain-relief clip assembly of FIG. 2A.
FIG. 7C is a side view of the second body portion of the strain-relief clip assembly of FIG. 2A.
FIG. 7D is a perspective end view of the second body portion of the strain-relief clip assembly of FIG. 2A.
FIG. 8A is a side view of the mount of the strain-relief clip assembly of FIG. 2A.
FIG. 8B is a top view of the mount of the strain-relief clip assembly of FIG. 2A.
FIG. 8C is an end view of the mount of the strain-relief clip assembly of FIG. 2A.

### DETAILED DESCRIPTION

This document describes strain-relief clip assemblies for providing strain relief to bundles of elongated objects (e.g., cables). In one example, a strain-relief clip assembly (also referred to herein as a "clip assembly") includes a fixing and a mount. The fixing is configured to secure onto a bundle and the mount is configured to attach the fixing to a structure. The fixing and the secured bundle are configured to rotate independently relative to the mount to provide resistance to axial and rotational movement to the bundle, which may be, in some instances, caused by the inadvertent mishandling of the bundle (e.g., wiring harness) during an installation process. Additionally, the utilization of the disclosed strain-relief clip assemblies may decrease cable rotation and twisting that is caused by vibration (e.g., vibration of a vehicle during operation of the vehicle), which can provide a strain relief solution for high-speed data cables for sensors, cameras, radars, and the like. In these ways, the strain-relief clip assembly may provide strain relief to an elongated bundle.

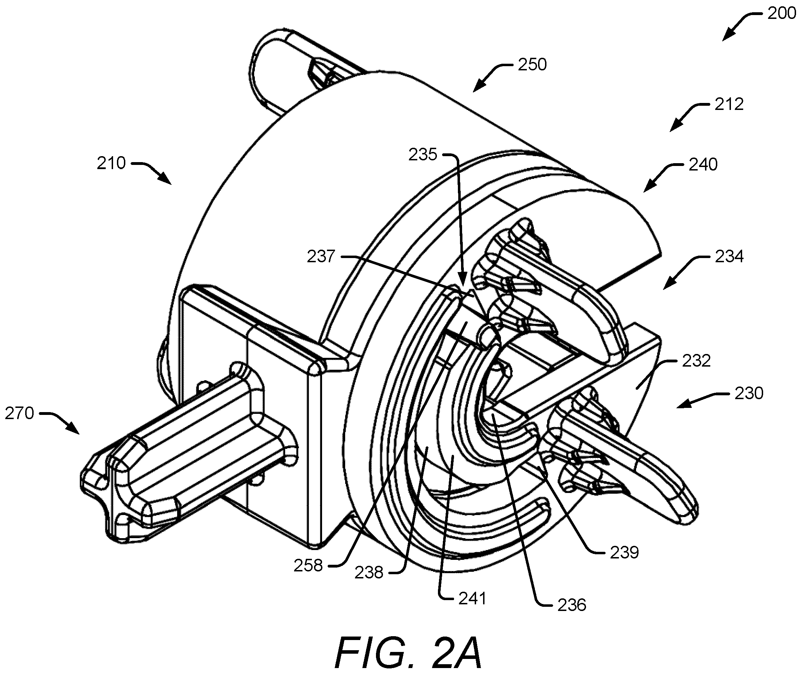

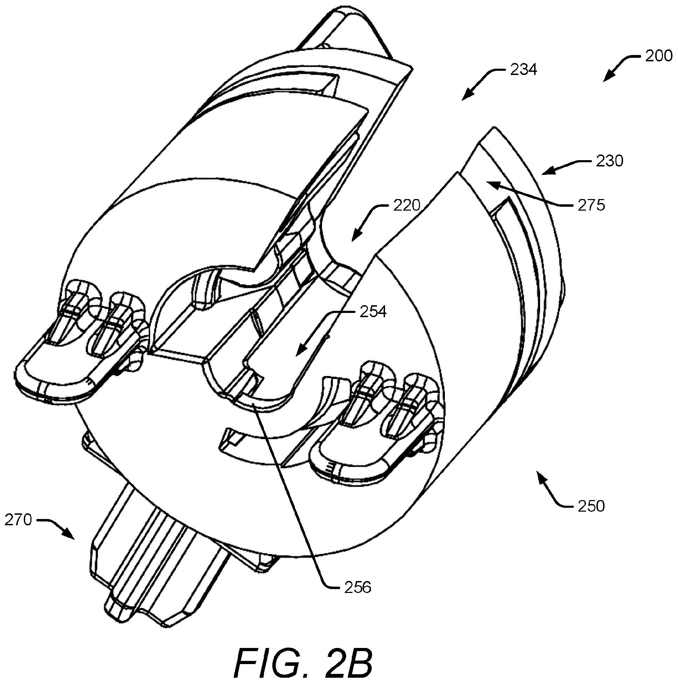

In this description, the first digit(s) of a reference character (e.g., call-out number) may correlate with the first figure number in which the reference character is labeled. For example, reference characters that start with a 2 (e.g., fixing 210, retainer assembly 212) may represent details first called out with respect to FIG. 2. Further, the same reference characters in different Drawings may identify the same or similar features, elements, and/or parts.

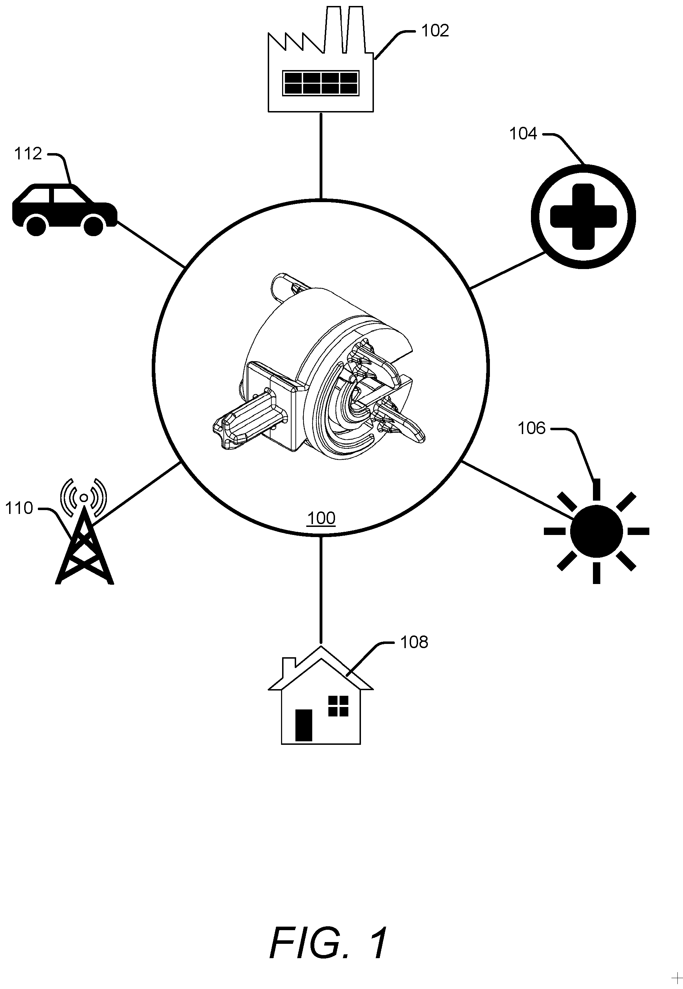

FIG. 1 is a schematic representation of strain-relief clip assemblies 100 for providing strain relief to bundles of elongated objects. As discussed herein, the strain-relief clip assemblies 100 may have particular application in the transportation markets 112 (e.g., for the routing of bundles during the assembly of a vehicle). While this disclosure, including the Drawings, references these markets, the strain-relief clip assemblies 100 may have application to bundles of elongated objects in other markets, including but not limited to industrial and manufacturing markets 102, healthcare markets 104, energy and utility markets 106, consumer and commercial markets 108, and/or telecommunications and data infrastructure markets 110.

Industrial and manufacturing markets 102 include industrial automation and equipment, control panels, machine building, machinery, electrical enclosures, material handling systems (e.g., conveyors), cooling systems, heavy equipment (e.g., construction and mining machinery), agricultural technology (e.g., farming equipment), chemical (e.g., chemical processing equipment), robotics (e.g., automated robotic systems), original equipment manufacturers (OEMS), mechanical components, and mechanical systems. Healthcare markets 104 include medical equipment and technology, and dental equipment and technology. Energy and utility markets 106 include renewable energy systems (e.g., solar, wind, hydroelectric), power generation and distribution, industrial lighting, and commercial lighting. Consumer and commercial markets 108 include appliances (e.g., home and commercial appliances), heating, ventilation, and air conditioning (HVAC), and consumer electronic devices. Telecommunications and data infrastructure markets 110 include telecommunications (e.g., general telecom services), communications (e.g., communication systems and equipment), internet service providers (ISPs), cable television companies (CATV), infrastructure for data storage and processing (e.g., data centers), broadband (e.g., broadband internet services), and datacom (e.g., data communications equipment). Transportation markets 112 include manufacturing and components for vehicles, trucks, automobiles, rail conveyances (e.g., trains), marine craft (e.g., ships, boats), aircraft, and aerospace.

As used herein, the terms "object" and "elongated object" are used to refer to all types and forms of elongated objects, including, but not limited to cables, wires, wire harnesses, hydraulic lines, pneumatic lines, optical fiber, textiles, plastic, pipes, tubing, conduits, elongated articles, and bundles of one or more of the same. While in this description and the Drawings, a cable is frequently used as an example object, other types of objects may be substituted.

FIGS. 2A, 2B, 3, 4, 5A, 5B, 6A-6D, 7A-7D, and 8A-8C illustrate a strain-relief clip assembly (e.g., clip assembly 200) for providing strain relief to a bundle of one or more elongated objects (e.g., cable 390). The clip assembly 200 includes a fixing portion (e.g., fixing 210) and/or a mount portion (e.g., mount 270). While fixing 210 includes first and second body portions that are configured to be connected together, in other aspects, a retainer assembly may include a single body portion.

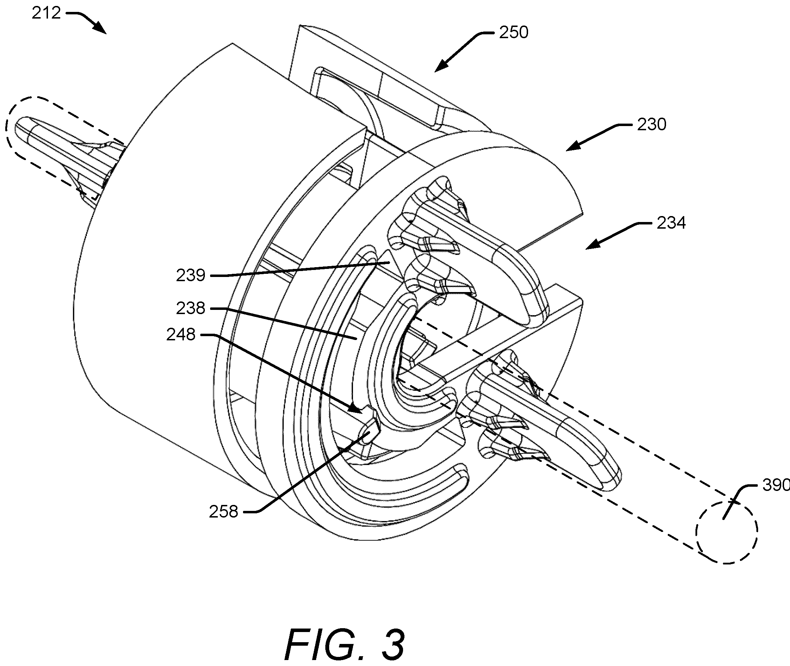

The first body portion 230 is movable relative to the second body portion 250. Rotation of the first body portion 230 relative to the second body portion 250, or vice versa, moves the fixing 210 between an open position and a closed position. The first body portion 230 includes a first open-ended slot 234 with a first closed end 236. The second body portion 250 includes a second open-ended slot 254 with a second closed end 256. The first open-ended slot 234 is configured to receive a first portion of the cable 390 therethrough to the cable retainer portion 220 and the second open-ended slot 254 is configured to receive a second portion of the cable 390 therethrough to the cable retainer portion 220, as illustrated in FIG. 3.

FIGS. 2A and 2B illustrate the clip assembly 200 in an open position. In the open position, the clip assembly 200 is configured to receive the cable 390 (illustrated in FIG. 3) into the cable retainer portion 220 of the fixing 210. For example, through the first open-ended slot 234 of a first body portion 230 and through the second open-ended slot 254 of a second body portion 250 and into a cable retainer portion 220. At least a portion of the cable retainer portion 220 is a cable passageway that is defined at least in part by the first closed end 236 of the first body portion 230 and a second closed end 256 of the second body portion 250. The fixing 210 is configured to attach to the cable 390 to provide resistance to axial and rotational movement when the cable 390 is attached to a fixing 210 that is mounted in the mount 270. The resistance to axial and rotational movement is provided through configuring the fixing 210 and cable 390 for rotation relative to the mount 270. In the open position, the first open-ended slot 234 and the second open-ended slot 254 are aligned to receive the cable 390 into the cable retainer portion 220, as illustrated in FIGS. 2A and 2B.

The fixing 210 includes a retainer assembly 212 (e.g., bushing portion) that is configured to retain the cable 390 in the fixing 210. The mount portion (e.g., mount 270) includes a connector 240 that is configured to movably connect with the retainer assembly 212. For example, the connector 240 may be configured to rotationally connect with the retainer assembly 212. The connector 240 of the mount 270 may support the retainer assembly 212 for rotation about a rotational axis. The retainer assembly 212 is supported for rotation about a rotational axis by the connector 240 of the mount 270. The fixing 210 and the secured cable 390 are configured to rotate independently relative to the mount 270. For example, the mount 270 may be fixed in place on the structure and the fixing 210 and the cable 390 secured in the fixing 210 are configured to rotate relative to the mount 270. In this way, the clip assembly 200 may provide strain relief to the cable 390.

The retainer assembly 212 may include a first body portion 230 and a second body portion 250. The second body portion 250 is configured to be coupled to the first body portion 230. In the aspect illustrated in FIG. 2A, the second body portion 250 couples to the first body portion 230 via a lock mechanism 235. The lock mechanism may include a snap-fit joint where a first component part feature (e.g., a protrusion, hook, knob, bulge) is configured to latch (e.g., latching engagement) with a reciprocal or corresponding second component part feature (e.g., detent, depression (undercut), groove, opening). Examples of snap-fit joints include, but are not limited to, cantilever snap-fit connections, annular snap-fit connections, torsional snap-fit connections, and the like. The snap-fit joint (e.g., lock mechanism 235) may include a resilient cantilever lug 258 that extends from the second body portion 250 and channel 238 with a connecting ledge 241 defined in the first body portion 230. The channel 238 may be shaped as a curved slot. The resilient cantilever lug 258 is configured for flexible insertion through the channel 238 and for snap-fit connection with the connecting ledge 241 of the first body portion 230. In aspects, through use of a snap-fit connection, the catch of the cantilever lug 258 can be disengaged from the connecting ledge, permitting the first body portion 230 and the second body portion 250 to be disconnected from one another.

The fixing 210 may include a rotation limiter configured for limiting the rotation of a body portion relative to another body portion (e.g., limiting the rotation of the first body portion 230 relative to the second body portion 250, limiting the rotation of the second body portion 250 relative to the first body portion 230, limiting the rotation of the first body portion 230 and the second body portion 250 relative to one another). In aspects, the channel 238 is configured to receive a pin 258 (e.g., cantilever lug 258, rotation-locking pin) that extends from the second body portion 250. A first end 237 of the channel 238 and a second end 239 of the channel 238 define rotational limits for the rotation of the first body portion 230 relative to the second body portion 250. In the aspect illustrated in FIG. 2A, the resilient cantilever lug 258 is configured as the pin. In implementations, a rotation limiter may be omitted and the first and second body portions can rotate freely relative to one another. In this way, the first and second body portions can rotate to any desired degree (e.g., can rotate 360 degrees).

At least one portion (e.g., first end 237, second end 239) of the channel 238 may include a detent portion (e.g., first detent 502, second detent 504) that is configured to receive the pin 258. The detent portion may slightly bend the pin 258 as it moves along the channel (e.g., curved slot). The detent portion may also help to retain the retainer assembly 212 in the open position and/or retain the retainer assembly 212 in the closed position. In implementations, a detent portion may be omitted.

FIG. 3 illustrates the clip assembly 200 in the closed position, with a cable 390 held therein (e.g., within the retainer assembly 212). In the closed position, the first open-ended slot 234 and the second open-ended slot 254 are unaligned and the cable 390 is retained within the cable retainer portion. In FIG. 3, the mount 270 is not shown for clarification purposes. With the retainer assembly 212 in the open position, the cable 390 is inserted into the first open-ended slot 234 of the first body portion 230 and the second open-ended slot 254 of the second body portion 250. The cable 390 is pushed into the retainer assembly 212 until the cable 390 engages a back radius (e.g., first closed end 236, second closed end 256) of the retainer assembly 212. The cable 390 can then be secured within the retainer assembly 212 by turning the second body portion 250 relative to the first body portion 230 (e.g., rotating the second body portion in a first rotational direction (such as, clockwise) or vice versa.

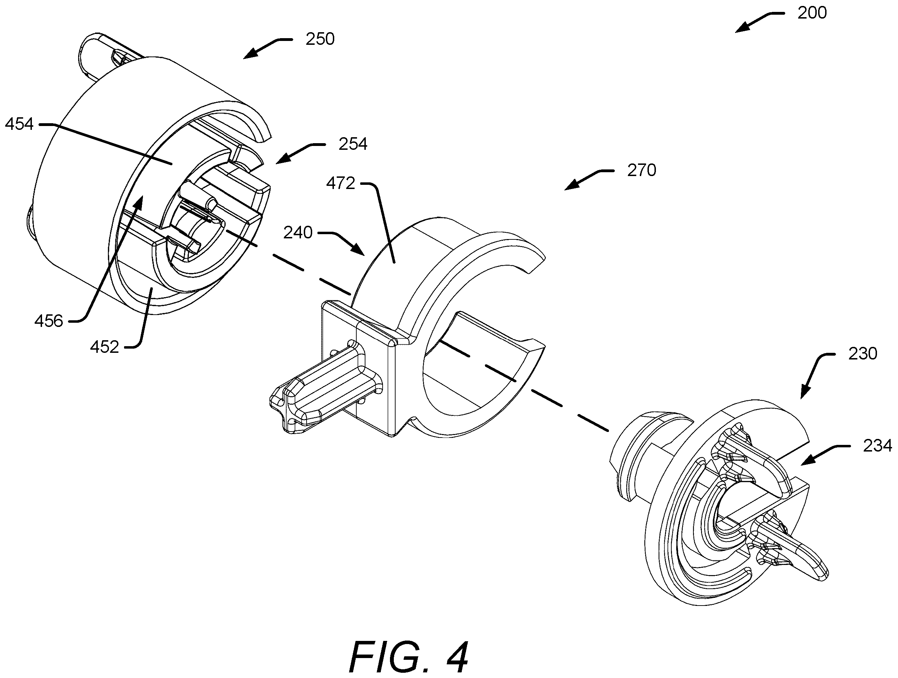

FIG. 4 is an exploded perspective view of the strain-relief clip assembly of FIG. 2A. FIG. 4 illustrates the alignment of the first open-ended slot 234 of the first body portion 230 and the second open-ended slot 254 of the second body portion 250, before assembly, with the mount 270 positioned therebetween. The connector 240 includes a guide wall 472 and the second body portion 250 includes an inner curtain wall 454 spaced apart from an outer curtain wall 452 to define a race 456 therebeween. The race 456 is configured to receive the guide wall 472. In implementations, a connector may be omitted.

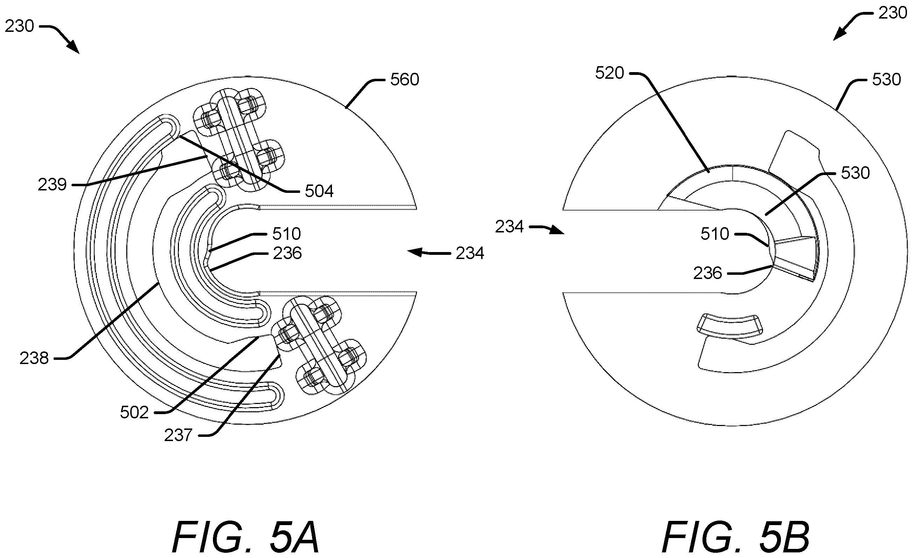

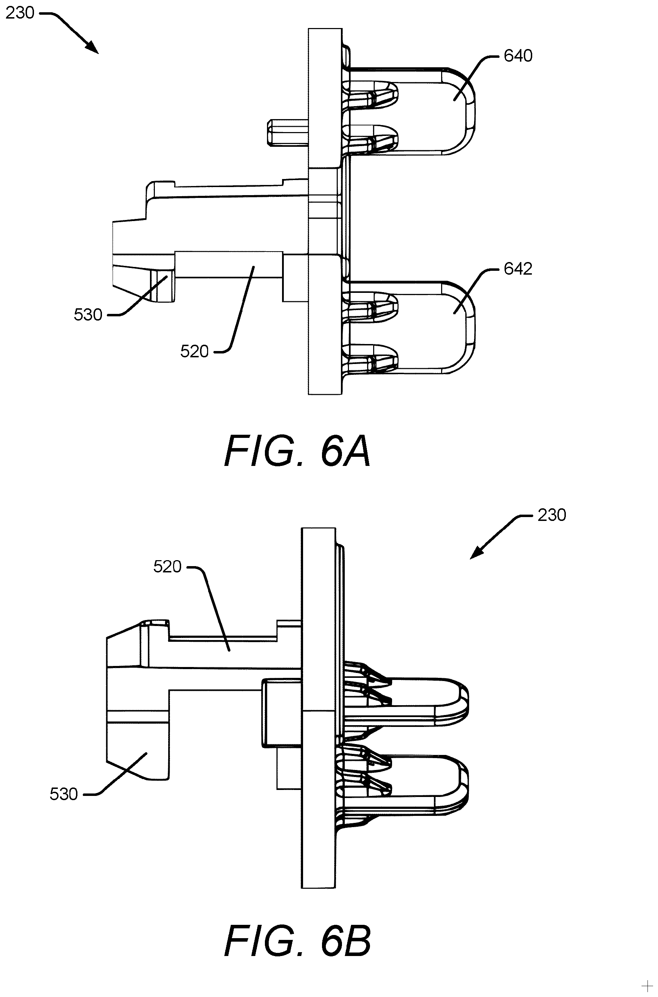

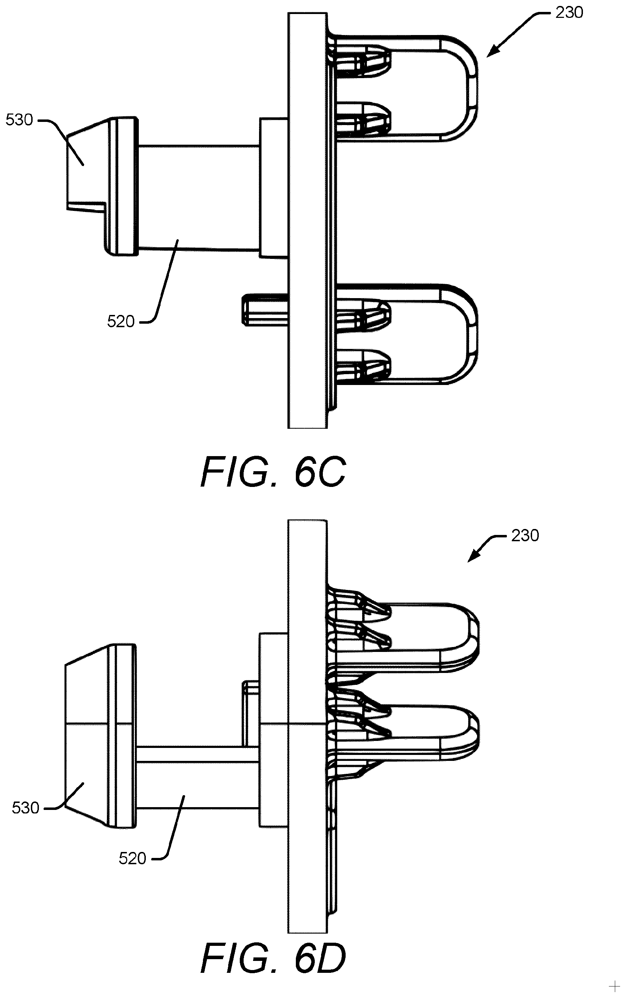

FIG. 5A, 5B, 6A, 6B, 6C, and 6D further illustrate the first body portion 230, with FIGS. 6A-6D illustrating a sequential rotation of the first body portion 230. The first body portion 230 includes an end flange 560, a beam 520, and a retention hook 530. The retention hook 530 configured to engage a retention tooth 720 located in the second body portion 250 (e.g., on the inner curtain wall 454 of the second body portion 250) to connect the first body portion 230 to the second body portion 250. The beam 520 may be cylindrical. After the insertion of the retention hook 530 of the first body portion 230 into the second body portion 250, and rotation of the second body portion 250 relative to the first body portion 230, the retention hook 530 engages a retention tooth 720 on the inner curtain wall 454 of the second body portion 250. Subsequently, ramp angles of the retention hook 530 and/or the retention tooth 720 may slide past each other to cause the cylindrical beam 520 to bend. Further rotation may cause the external retention hook to pass over the internal retention tooth to complete a coupling of the first body portion 230 to the second body portion 250. Insertion of the retention hook 530 of the first body portion 230 into the second body portion 250 may also cause the pin 258 (e.g., cantilever lug 258, rotation-locking pin) that extends from the second body portion 250 to pass through the channel 238.

The first detent 502 may be located adjacent to the first end 237 of the channel 238 and the second detent 504 may be located adjacent to the second end 239 of the channel 238. The fixing 210 is an open position when the pin (e.g., cantilever lug 258) is positioned adjacent to the first end 237 of the channel 238 and is in a closed position when the pin is positioned adjacent to the second end 239 of the channel 238. The detent portion(s) and the pin 258 may cooperate to provide tactile feedback to a technician regarding a position of the fixing 210. For example, as the first body portion 230 is rotated relative to the second body portion 250 (or vice versa), the arrival of the pin in a detent portion may provide feedback to the technician that indicates a position of the first and second body portions relative to one another (e.g., a first angular position, a second angular position, an angular position indicative of completely closed, an angular position indicative of completely open).

In aspects, at least one of the first body portion 230 or the second body portion 250 includes at least one protrusion (e.g., protruding bump, cable compression bump, flange, ridge, and the like) that extends into the cable retainer portion 220 and which is configured to apply compressive pressure on the cable 390 to lock the retainer assembly 212 in a position on the cable 390 and/or to retain the cable 390 within an inner diameter of the retainer assembly 212. In one example, the first closed end 236 of the first body portion 230 includes at least one protrusion (e.g., protrusion 510), as illustrated in FIG. 5. In another example, the second body portion 250 includes at least one protrusion (e.g., protrusion 710, protrusion 712). In implementations, a protrusion may be omitted. A protrusion may prevent rotation of the cable 390 and may also prevent longitudinal migration of the cable within the retainer assembly 212.

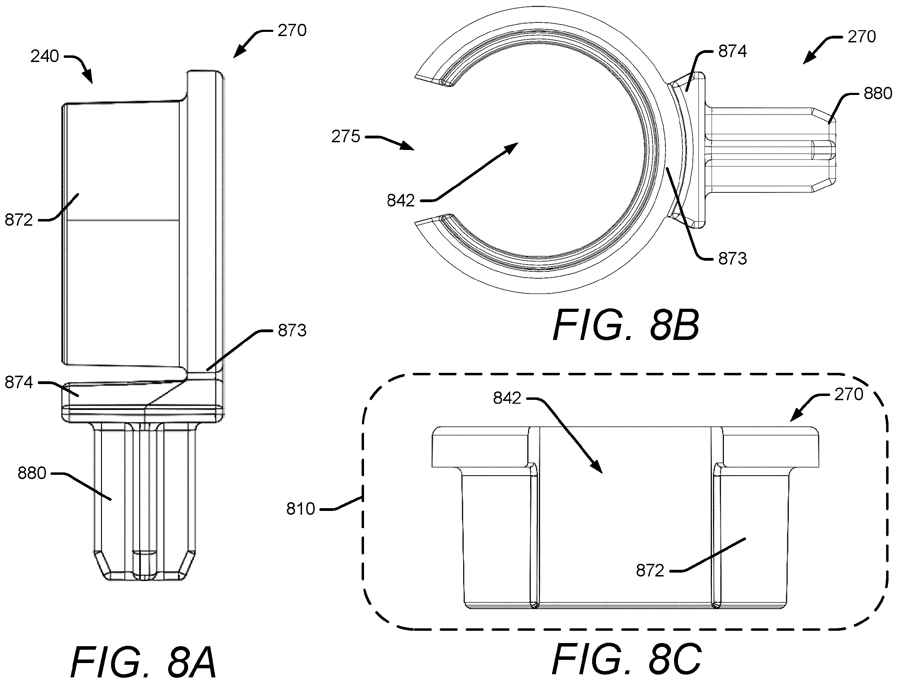

The mount 270 is configured to attach the fixing 210 to a structure (e.g., structure 810, illustrated in FIG. 8). For example, a machinery cabinet. The term "structure" is used herein to refer to machines, cabinets, housings, frames, frame rails, enclosures, vehicle chassis, panels, rails, support beams, cable routing channels, conveyor channel assemblies, and the like. A structure may include a mount surface and/or a mount aperture defined therein (e.g., a slot, a channel, a bore, a threaded hole), and the like.

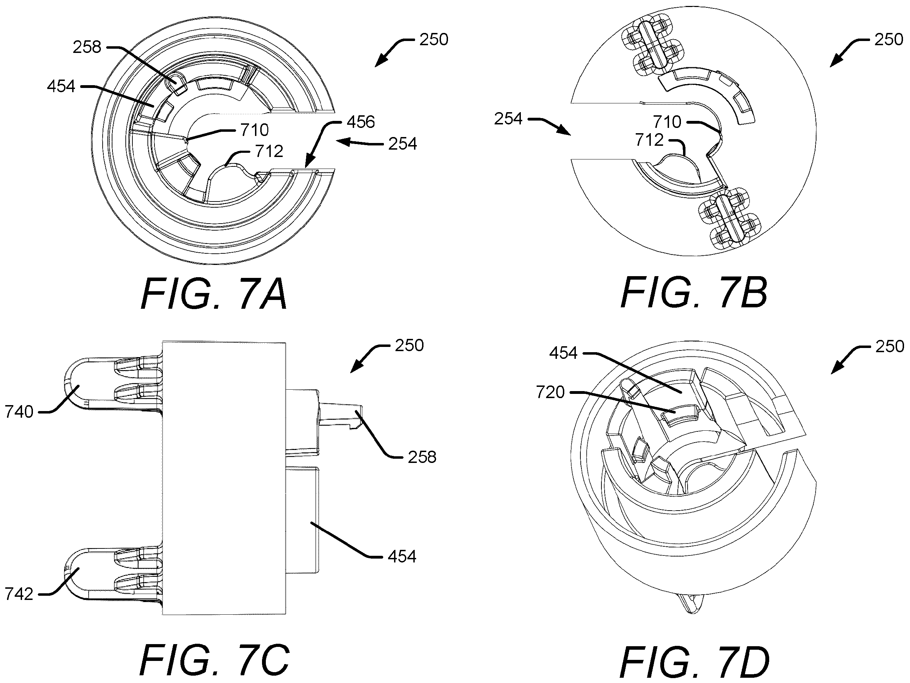

The retainer assembly 212 may include one or more tabs (e.g., finger grips) configured for grasping by a technician and that extend from the retainer assembly 212. For example, in FIG. 6A, the first body portion 230 includes tab 640 and tab 642, and in FIG. 7A, the second body portion 250 includes tab 740 and tab 742. The technician may utilize a tab to turn the first body portion and/or second body portion relative to one another and/or relative to the mount 270 to secure the clip assembly 200 on the cable 390.

The mount 270 may include a base 874 that supports the connector 240 and is configured to connect to the structure 810. In this way, the base 874 supports the connector 240 on the structure 810. In implementations, a base may be omitted. The mount 270 may further include a fastener 880 that is configured to connect the mount 270 to the structure 810. The fastener 880 may include any suitable construction to mount to the structure 810. For example, a blind hole fastener, a clamp fastener, a clamp portion, a mechanical fastener, a T-nut fastener for a T-slot metal frame, a masonry mount, a push mount, a swivel mount, an arrowhead fastener, a fir-tree fastener, an edge-clip mount, a clip fastener, cradle portion, a twist-lock fastener configured for receipt into the slot of a rail, a weld stud mount, a cable attachment, a hose attachment, a magnet, a friction fit, and the like, and combinations thereof (e.g., a fastener and an adhesive fastener, an adhesive fastener and a magnet). In implementations, a fastener may be omitted.

The mount 270 may further include an upright 873 extending from the base 874. The mount 270 may further include the guide wall 472 extending from the upright 873 and spaced apart from the base 874. The guide wall 472 may define a conduit 842. The guide wall 472 may be configured for receipt into a race 456 defined in the retainer assembly 212 to rotationally connect the mount 270 to the retainer assembly 212. The guide wall may be arc-shaped. In implementations, the upright and/or the guide wall may be omitted. The mount 270 may further include a passageway 275 defined through the guide wall 472 configured to receive a cable 390 into the conduit 842. In implementations, a passageway may be omitted.

In aspects, the first body portion 230 is configured to connect with the second body portion 250 with the connector 240 retained therebetween, as illustrated in FIGS. 2A, 2B, 3, 4, 5A, 5B, 6A-6D, 7A-7D, and 8A-8C. While the aspect of FIGS. 2A, 2B, 3, 4, 5A, 5B, 6A-6D, 7A-7D, and 8A-8C show the mount portion received within the fixing portion, in aspects, a fixing portion may be configured to clip into or onto the mount portion. For example, the mount portion may include a receiver defined by a pair of opposing flex arms that are configured to deflect to permit insertion of the fixing portion therein. In such a configuration, the fixing portion may define a channel between a pair of end flanges and the channel is received into the receiver and the fixing portion is configured to rotate relative to the mount portion within the receiver. In this way, the mount may engage around the outer diameter of the retainer assembly surfaces with minimal clearance and provides low static friction rotation which may provide strain relief when twisting of the elongated bundle occurs.

In aspects, one or more of the components of clip assembly (e.g., a first body portion, a second body portion, a cable retainer portion, a connector, a base) are formed of a suitable material(s) through one or more of an injection-molding process, an extrusion process, an additive manufacturing process (e.g., a fused deposition modeling (FDM) process, a three-dimensional (3D) printing process), or another suitable process. In implementations, one or more of the components of clip assembly (e.g., a first body portion, a second body portion, a cable retainer portion, a connector, a base) can be assembled from separate plastic parts and fixed together through welding, solvents, adhesives, and the like.

Examples of materials for a strain-relief clip assembly disclosed herein include, but are not limited to any suitable material, including, but not limited to, a metal (e.g., wire), a polymer (e.g., a polymeric material), and/or a composite. Suitable polymeric materials may include one or more of poly vinyl chloride (PVC), polyamide (PA), polypropylene (PP), polyethylene (PE), polyphenylene sulfide (PPS), polyether ether ketone (PEEK), polyaryletherketone (PAEK), ethylene tetrafluoroethylene (ETFE), polyacetal (POM), polybutylene terephthalate (PBT), ultraviolet stabilized polyacetal (POMUV), acrylonitrile styrene acrylate (ASA), cross-linked thermoplastics, partially cross-linked thermoplastics, higher-temperature resins, ultraviolet (UV) resistant resins, other thermoplastic materials, and the like, and copolymers, blends, or alloys thereof)) as well as fiber reinforced materials. A suitable polymeric material may include one or more additives (e.g., heat stabilizers (e.g., copper iodide), impact modifiers (e.g., polyolefin, urethane, rubber), UV stabilizers (e.g., carbon black, hindered amine light stabilizers (HALS)), flame retardants (e.g., nitrogen-based halogen-free flame retardants, melamine cyanurate, melamine borate, ammonium polyphosphate), colorants, and the like). One or more of the components of the disclosed strain-relief clip assemblies may be formed of the same material as the other components, or of a different material than the other components.

In this description of aspects of strain-relief clip assemblies for providing strain relief to bundles of elongated objects, ordinal numbers such as "first" and "second" are used only to distinguish between different described objects, and have no limitation on a location, a sequence, a priority, a quantity, content, or the like of the described objects. For example, a "retainer assembly" is used as an example, and there may be one or more "retainer assemblies." Additionally, objects modified by different ordinal numbers may be the same or different objects. For example, if the described object is a "first body portion," a "first body portion" and a "second body portion" may be the same or different body portions.

Unless context dictates otherwise, use herein of the word "or" may be considered use of an "inclusive or," or a term that permits inclusion or application of one or more items that are linked by the word "or" (e.g., a phrase "A or B" may be interpreted as permitting just "A," as permitting just "B," or as permitting both "A" and "B"). Also, as used herein, a phrase referring to "at least one of" a list of items refers to any combination of those items, including single members. For instance, "at least one of a, b, or c" can cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c, or any other ordering of a, b, and c). Further, items represented in the accompanying figures and terms discussed herein may be indicative of one or more items or terms, and thus reference may be made interchangeably to single or plural forms of the items and terms in this written description.

Some additional examples of strain-relief clip assemblies are described in the following Examples.

Example 1. A fixing (e.g. 210) comprising: a retainer assembly (e.g. 212) configured to retain a cable (e.g. 390), the retainer assembly (e.g. 212) comprising: a first body portion (e.g. 230) that includes a first open-ended slot (e.g. 234) with a first closed end (e.g. 236); a second body portion (e.g. 250) that includes a second open-ended slot (e.g. 254) with a second closed end (e.g. 256), the second body portion configured to be coupled to the first body portion; and a cable retainer portion (e.g. 220) configured to receive the cable (e.g. 390), the cable retainer portion (e.g. 220) defined by the first closed end (e.g. 236) and the second closed end (e.g. 256).

Example 2. The fixing of Example 1, wherein the first body portion (e.g. 230) is movable relative to the second body portion (e.g. 250).

Example 3. The fixing of Example 2, wherein rotation of the first body portion (e.g. 230) relative to the second body portion (e.g. 250) moves the fixing between an open position and a closed position.

Example 4. The fixing of Example 3, wherein in the open position the first open-ended slot (e.g. 234) and the second open-ended slot (e.g. 254) are aligned to receive the cable (e.g. 390) into the cable retainer portion (e.g. 220).

Example 5. The fixing of Example 4, wherein in the closed position, the first and second open-ended slots (e.g. 234, 254) are unaligned and the cable (e.g. 390) is retained within the cable retainer portion (e.g. 220).

Example 6. The fixing (e.g. 210) of Example 1, further comprising: a snap-fit joint that couples the first body portion (e.g. 230) with the second body portion (e.g. 250).

Example 7. The fixing of Example 1, wherein the first open-ended slot (e.g. 234) is configured to receive a first portion of the cable (e.g. 390 therethrough to the cable retainer portion (e.g. 220) and the second open-ended slot (e.g. 254) is configured to receive a second portion of the cable (e.g. 390) therethrough to the cable retainer portion (e.g. 220).

Example 8. The fixing of Example 1, wherein the first body portion (e.g. 230) defines a channel (e.g. 238) configured to receive a pin (e.g. 258) that extends from the second body portion (e.g. 250), a first end (e.g. 237) of the channel (e.g. 238 and a second end (e.g. 239) of the channel (e.g. 238) define rotational limits for the rotation of the first body portion (e.g. 230) relative to the second body portion (e.g. 250).

Example 9. The fixing of Example 8, wherein at least one of the first end or the second end further comprise: a detent configured to receive the pin to provide tactile feedback to a user.

Example 10. The fixing of Example 1, wherein at least one of the first or second body portions include a protrusion that extends into the cable retainer portion, the protrusion configured to apply compressive pressure on the cable to lock the retainer assembly (e.g. 212) in a position on the cable.

Example 11. The fixing of Example 1, further comprising: a mount (e.g. 270) comprising: a connector (e.g. 240) configured to movably connect with the retainer assembly (e.g. 212); and a base (e.g. 874) that supports the connector (e.g. 240) on a structure (e.g. 810).

Example 12. The fixing of Example 11, wherein the first body portion (e.g. 230) is configured to connect with the second body portion (e.g. 250) with the connector (e.g. 240) retained therebetween.

Example 13. The fixing of Example 12, wherein the connector (e.g. 240) includes a guide wall (e.g. 472) and the second body portion (e.g. 250) includes an inner curtain wall (e.g. 454) spaced apart from an outer curtain wall (e.g. 452) to define a race (e.g. 456) therebeween, the race (e.g. 456) configured to receive the guide wall (e.g. 472).

Example 14. The fixing of Example 11, wherein the mount (e.g. 270) further comprises: a fastener (e.g. 880) configured to connect the mount (e.g. 270) to the structure (e.g. 810).

Example 15. A mount (e.g. 270) comprising: a connector (e.g. 240) configured to movably connect with a retainer assembly (e.g. 212); and a base (e.g. 874) that supports the connector (e.g. 240), the base (e.g. 874) configured to connect to a structure (e.g. 810).

Example 16. The mount (e.g. 270) of Example 15, wherein the connector (e.g. 240) is configured to rotationally connect with the retainer assembly (e.g. 212).

Example 17. The mount (e.g. 270) of Example 15, wherein the connector (e.g. 240) is arranged between a first body portion (e.g. 230) and a second body portion (e.g. 250) of the retainer assembly (e.g. 212).

Example 18. The mount (e.g. 270) of Example 15, further comprising: an upright (e.g. 873) extending from the base (e.g. 874); a guide wall (e.g. 472) extending from the upright (e.g. 873) and spaced apart from the base (e.g. 874), the guide wall (e.g. 472) defining a conduit (e.g. 842); and a passageway (e.g. 275) defined through the guide wall (e.g. 472) configured to receive a cable (e.g. 390) into the conduit (e.g. 842).

Example 19. The mount (e.g. 270) of Example 18, wherein the guide wall (e.g. 472) is configured for receipt into a race (e.g. 456) defined in the retainer assembly (e.g. 212) to rotationally connect the mount (e.g. 270) to the retainer assembly (e.g. 212).

Example 20. A mount (e.g. 270) of Example 15, further comprising: the retainer assembly (e.g. 212) comprising: a first body portion (e.g. 230) that includes a first open-ended slot (e.g. 234) with a first closed end (e.g. 236); a second body portion (e.g. 250) that includes a second open-ended slot (e.g. 254) with a second closed end (e.g. 256), the second body portion configured to be coupled to the first body portion; and a cable retainer portion (e.g. 220) configured to receive the cable (e.g. 390), the cable retainer portion (e.g. 220) defined by the first closed end (e.g. 236) and the second closed end (e.g. 256).

In aspects, a strain-relief clip assembly for providing strain relief to a bundle of elongated objects may include one or more of the features of the strain-relief clip assemblies illustrated in the Drawings and described above. Although implementations of strain-relief clip assemblies for providing strain relief to bundles of elongated objects have been described in language specific to certain features and/or methods, the specific features and methods disclosed herein are example implementations. Further, although implementations strain-relief clip assemblies for providing strain relief to bundles of elongated objects have been described in language specific to certain features and/or methods, the subject of the appended claims is not necessarily limited to the specific features or methods described. Rather, the specific features and methods are disclosed as example implementations of strain-relief clip assemblies for providing strain relief to bundles of elongated objects.

## Claims

1. A fixing comprising:
a retainer assembly configured to retain a cable, the retainer assembly comprising:
a first body portion that includes a first open-ended slot with a first closed end;
a second body portion that includes a second open-ended slot with a second closed end, the second body portion configured to be coupled to the first body portion; and
a cable retainer portion configured to receive the cable, the cable retainer portion defined by the first closed end and the second closed end.

2. The fixing of claim 1, wherein the first body portion is movable relative to the second body portion,in particular such that a rotation of the first body portion relative to the second body portion moves the fixing between an open position and a closed position.

3. The fixing of claim 2, wherein in the open position the first open-ended slot and the second open-ended slot are aligned to receive the cable into the cable retainer portion,in particular such that in the closed position, the first and second open-ended slots are unaligned and the cable is retained within the cable retainer portion.

4. The fixing of any one of the preceding claims, further comprising:
a snap-fit joint that couples the first body portion with the second body portion.

5. The fixing of any one of the preceding claims, wherein the first open-ended slot is configured to receive a first portion of the cable therethrough to the cable retainer portion and the second open-ended slot is configured to receive a second portion of the cable therethrough to the cable retainer portion.

6. The fixing of any one of the preceding claims, wherein the first body portion defines a channel configured to receive a pin that extends from the second body portion, a first end of the channel and a second end of the channel define rotational limits for the rotation of the first body portion relative to the second body portion.

7. The fixing of claim 6, wherein at least one of the first end or the second end further comprise:
a detent configured to receive the pin to provide tactile feedback to a user.

8. The fixing of any one of the preceding claims, wherein at least one of the first or second body portions include a protrusion that extends into the cable retainer portion, the protrusion configured to apply compressive pressure on the cable to lock the retainer assembly in a position on the cable.

9. The fixing of any one of the preceding claims, further comprising:
a mount comprising:
a connector configured to movably connect with the retainer assembly; and
a base that supports the connector on a structure,
in particular with the first body portion being configured to connect with the second body portion with the connector retained therebetween.

10. The fixing of claim 9, wherein the mount further comprises:
a fastener configured to connect the mount to the structure.

11. A mount comprising:
a connector configured to movably connect with a retainer assembly; and
a base that supports the connector, the base configured to connect to a structure, the connector configured to rotationally connect with the retainer assembly.

12. The mount of any claim 11, wherein the connector is arranged between a first body portion and a second body portion of the retainer assembly.

13. The mount of any one of claims 11 or 12, further comprising:
an upright extending from the base;
a guide wall extending from the upright and spaced apart from the base, the guide wall defining a conduit; and
a passageway defined through the guide wall configured to receive a cable into the conduit.

14. The mount of claim 13, wherein the guide wall is configured for receipt into a race defined in the retainer assembly to rotationally connect the mount to the retainer assembly.

15. A mount of any one of claims 11 to 14, further comprising:
the retainer assembly comprising:
a first body portion that includes a first open-ended slot with a first closed end;
a second body portion that includes a second open-ended slot with a second closed end, the second body portion configured to be coupled to the first body portion; and
a cable retainer portion configured to receive the cable, the cable retainer portion defined by the first closed end and the second closed end.
